# EUROPEAN PATENT APPLICATION

(11) **EP 1 026 234 A1**
(43) Date of publication of application: **09.08.2000**
(21) Application number: 98941724.1
(22) Date of filing: 04.09.1998
(51) Int. Cl.: C12G 3/12

(54) **PROCESS FOR PREPARING DISTILLED LIQUOR**

(30) Priority: 04.09.1997 JP 23947997
(71) Applicant: KYOWA HAKKO KOGYO CO., LTD., Chiyoda-ku, Tokyo 100-8185 (JP)
(72) Inventor: AGO, Shoji, Tsuchiura-shi Ibaraki 300-1173 (JP); KIKUCHI, Yasuhiro, Tsukuba-shi Ibaraki 305-0035 (JP); FUKUDA, Kazuro, Inashiki-gun Ibaraki 300-0331 (JP); KOBATA, Kenichiro, Tsuchiura-shi Ibaraki 300-0032 (JP)
(74) Representative: Harding, Charles Thomas
(86) International application number: JP9803979
(87) International publication number: WO9911752

(57) **Abstract**

The present invention relates to a process for producing distilled liquor, comprising adding fats and oils to mash, and also relates to a process for producing distilled liquor, comprising adding fats and oils and lipase to mash.

## Description

### Technical Field

The present invention relates to a process for producing distilled liquor.

### Background Art

When distilled liquor, particularly shochu (Japanese distilled liquor) is produced, unpleasant odor called oily odor may sometimes develop. As the causal substances of oily odor, n-hexanal, 2,4-nonadienal, azelatic acid semialdehyde ethyl, pimelic acid semialdehyde ethyl and the like have been known. The process for removing the oily odor includes known ones such as cooling and filtering off unsaturated fatty acid ethyl esters such as ethyl linoleate which are the precursors of the oily odor by using filtering agents, and re-distillation process by utilizing the difference in specific vaporization degree between individual components, and removing the oily odor by using adsorbents [Nippon Brewery Association Journal, Vol.75, No.12, pp. 944 - 952, 1980].

However, these processes have disadvantage because the processes require complex procedures and that saturated fatty acid ethyl esters such as ethyl caproate, ethyl caprylate, ethyl capriate, ethyl laurate, ethyl myristate and ethyl palmitate, which contribute to rich flavor and mellowness are removed simultaneously. Therefore, when the oily odor is removed by these processes, the flavor of distilled liquor is lost.

### Disclosure of the Invention

The present invention relates to a process for producing distilled liquor, characterized by adding fats and oils to mash and a process for producing distilled liquor, characterized by adding fats and oils and lipase to mash.

As the fats and oils to be used in the present invention, any of natural fats and oils and synthetic fats and oils can be used; natural fats and oils are preferably used, and fats and oils derived from plants are more preferably used.

The fats and oils derived from plants include, for example, coconut oil, palm oil, palm kernel oil, cacao oil, Cuphea oil and the like; coconut oil, palm oil and palm kernel oil are preferably used; and coconut oil and palm oil are particularly preferable.

The fats and oils to be used in the present invention preferably contain saturated fatty acids such as caproic acid, caprylic acid, capric acid, lauric acid, myristic acid, palmitic acid, stearic acid at 40 % by weight or more of the total content of the fatty acids. Moreover, when the fats and oils of the invention contain unsaturated fatty acids, polyvalent unsaturated fatty acids such as linoleic acid, linolenic acid are preferably contained therein in an amount of below 20 % by weight of the content of the unsaturated fatty acids.

As the lipase, for example, lipase with the activity of triacylglycerol hydrolase (E.C. 3.1.1.3) may be mentioned.

The lipase can be used in any forms such as purified enzyme, crude enzyme, microbial culture, bacteria or bacterial processed material, or cell or tissue of animal or plant, or processed material thereof.

For such processed materials, the processing means includes, for example, drying process, freeze-drying process, surfactant process, enzymatic process, ultrasonic process, mechanical friction process, and protein fractionating process.

As the lipase, for example, the following lipase specimens commercially available are preferably used: Lipase M-10 [derived from Mucor javanicus; manufactured by Amano Pharmaceuticals, Co.], Palatase M [derived from Mucor miehei; manufactured by Novo Novordisk, Co.], Lipase F [derived from Rhizopus sp.; manufactured by Amano Pharmaceuticals, Co.], Talipase [derived from Rhizopus delemar; manufactured by Tanabe Pharmaceuticals, Co.], Newlase F [derived from Rhizopus niveus; manufactured by Amano Pharmaceuticals, Co.], Lipase MY [derived from Candida cylindracea; manufactured by Meito Industry, Co.], Lipase A [derived from Aspergillus niger; manufactured by Amano Pharmaceuticals, Co.], Lipase Au [derived from Arthrobacter ureafaciens; manufactured by Shin-Nippon Kagaku Industry, Co.], Lipase P [derived from Pseudomonas sp.; manufactured by Amano Pharmaceuticals, Co.], Lipase SP [derived from Chromobacterium viscosum; manufactured by Toyo Brewery, Co.], PANCREATIC LIPASE 250 [derived from swine pancreas; manufactured by KYOWA ENZYME, Co.], Lipase 400 [derived from the pharynx of sheep and goat; manufactured by KYOWA HIGH FOODS, CO.], Lipase 600 [derived from the pharynx of cow; manufactured by KYOWA HIGH FOODS, CO.], and the like.

In case that the lipase is derived from microorganisms, the enzyme activity thereof can be assayed according to the method described in Oil Chemistry (Yu Kagaku), Vol. 36, page 821 (1987). The enzyme quantity generating 1 µmol fatty acid per one minute is expressed as one unit, when the enzyme activity is assayed by the above-mentioned method.

In case that the lipase is derived from animal pharynx, the enzyme activity can be assayed by the following method. That is, 1 ml of a 4 % polyvinyl alcohol solution containing tributyrin at 25 % (hereinafter referred to as tributyrin emulsion) is mixed with 2 ml of Mcllvain buffer, pH 5.5; to the resulting solution is added 2 ml of an enzyme solution, for reaction at 30 °C for 60 minutes; and thereafter, 5 ml of a solution of ethanol and acetone (1:1) is added to the reaction solution, to terminate the reaction. After the termination of the reaction, the enzyme activity of the reaction solution is calculated by titrating the reaction solution with 0.05 N sodium hydroxide aqueous solution. When the enzyme activity is assayed by the said method, the enzyme quantity generating 1 µmol butyric acid per one minute is expressed as one unit.

The process for producing distilled liquor of the present invention can be used for producing any of distilled liquor types, such as shochu (Japanese distilled liquor), paichu (Chinese distilled liquor), whisky, brandy, vodka, rum, gin, tequila; the process for producing distilled liquor can preferably be used for producing shochu.

For the process for producing distilled liquor in the present invention, the general method for producing distilled liquor is used, which comprises saccharifying carbon sources by using koji mold, saccharifying enzymes, and the like, if necessary, subjecting the resulting mixture to alcohol fermentation and thereafter distilling the resulting mash, except that the inventive process further comprises adding fats and oils to mash or adding fats and oils and lipase to mash.

As such carbon sources, use can be made of any saccharide or starch. The carbon sources include, for example, cereals such as rice, barley, corn, millet, kaoliang, barnyard grass, Chinese millet, sweet potato, potato and buckwheat, fruits such as grapes, molasses, and glucose.

The koji mold include filamentous fungi for use in rice koji, barley koji, and malted bran; for example, microorganisms belonging to the genus Aspergillus or Rhizopus are used as the koji mold.

The saccharifying enzymes include, for example, enzymes generally contained in malt, enzymes produced by koji mold, and enzyme preparations such as those of α-amylase, glucoamylase and protease.

As for the process of alcohol fermentation, parallel complex fermentation is generally conducted, comprising decomposing cereal starch into saccharide by means of koji mold or saccharifying enzymes, and adding yeast to the resulting saccharide for alcohol fermentation, when cereals are used as the carbon sources; when saccharide of fruits, molasses, glucose, and the like are used as the carbon sources, single fermentation is generally conducted, comprising directly adding yeast to the saccharides for fermentation. For example, when producing shochu, step-wise charging referred to as first charging and second charging, comprising charging koji mold at the time of the initiation of alcohol fermentation and then adding the remaining carbon sources over the course of the fermentation, is generally conducted.

As for the yeast, any yeast to be used for producing distilled liquor may be used; yeast belonging to the genus Saccharomyces, for example, Saccharomyces cerevisiae and Saccharomyces uvarum, are preferably used. The yeast for shochu includes, for example, the Association shochu yeast, and awamori yeast.

Alcohol fermentation is conducted generally at pH 3.5 to 5.0 and a temperature of 5 to 25 °C for 7 to 14 days for shochu, 3 to 4 days for whisky and 7 to 14 days for brandy.

In the present invention, the culture recovered through alcohol fermentation is referred to as mash.

The amount of fats and oils to be added to mash is preferably 1 to 30 parts by weight, more preferably 2 to 10 parts by weight per 100 parts by weight of mash. Fats and oils can be added to mash at any time prior to the start of distillation, preferably after the termination of alcohol fermentation and prior to the start of distillation, most preferable immediately before the start of distillation.

When fats and oils and lipase are to be added to mash, fats and oils and lipase can separately be added to mash; otherwise, a reaction solution obtained by the reaction of fats and oils with lipase can be added to mash.

When fats and oils and lipase are to be added separately to mash, the quantity of fats and oils to be added and the timing of adding fats and oils are the same as in the case of adding fats and oils to mash. The quantity of lipase to be added varies depending on the type of lipase, the type of mash, the reaction conditions, and the like; generally, lipase is added at preferably 10 to 2,000 units, more preferably 50 to 500 units per 1 g of fats and oils. Lipase can be added to mash at any time prior to the start of distillation, namely prior to, during or after the addition of fats and oils, preferably during or after the addition of fats and oils.

When the reaction solution of fats and oils with lipase is to be added to mash, lipase is generally added at preferably 10 to 2,000 units, more preferably 50 to 500 units per 1 g of fats and oils; and the reaction is continued at 5 to 60 °C, preferably 15 to 35 °C and generally for 6 hours or more, preferably for 12 to 36 hours.

When fats and oils are reacted with lipase, the reaction solution may contain other substances as long as the reaction solution could retain the lipase activity. As such other substances, water is preferably used. Particularly preferably, fats and oils and lipase react together in a mixture solution prepared to a ratio of 0.5 to 2 g of water to 1 g of fats and oils.

When the resulting reaction solution is to be added to mash, the quantity of fats and oils contained in the reaction solution to be added and the timing of adding the reaction solution are the same respectively as in the case of adding fats and oils to mash.

The mash recovered by the aforementioned method may be distilled as such, or may treat the mash by pressing and filtration, centrifugation, and the like to separate and discard fermentation residue, yeast cell and the like, and distill the resulting solution. For example, distillation for shochu can be carried out according to the Production Technique of Authentic Shochu, (Foundation) Nippon Brewery Association (1991).

The liquid recovered by distillation is designated stock liquor (genshu); the stock liquor is prepared into a form of distilled liquor, as such or after preparation such as mixing, dilution or alcohol addition, or the like. Additionally, it is possible to prepare distilled liquor by adding separately produced alcohol to the stock liquor.

### Best Mode for Carrying Out the Invention

Examples are shown below to explain present invention specifically. In these examples, 'weight %' is described as '%'.

### Example 1

Ground rice (420 g) was rinsed, immersed, water drained, boiled in steam and left to stand for cooling, followed by inoculation and mixing of a white koji mold (Aspergillus kawachii; Kawachii Genichiro Shoten) as seed koji at 0.1 % of the weight of the rice, and prepared koji at a temperature suitable for koji preparation, namely 35 to 42 °C, in a koji machine at a constant temperature. First charging was conducted by adding water (600 ml) and yeast for shochu according to the Association (Nippon Brewery Association), for saccharification and alcohol fermentation at 20 °C for 5 days. As to yeast, the yeast for shochu according to the Association was cultivated in 25 ml of an YPD medium (1 % yeast extract, 2 % peptone and 2 % glucose) and the resulting culture was centrifuged to obtain cells. The obtained cells were rinsed in water to be used as such yeast for first charging.

Second charging was conducted as follows; ground rice as a multiplier raw material was subjected to rinsing, immersion, water draining and steam boiling by a conventional method, followed by addition of barley (840 g) left to stand for cooling and water (1200 ml), for saccharification and alcohol fermentation at 20 °C. On day 7 after the second charging, coconut oil was added respectively weights shown in Table 1 per 100 g of mash, for additional saccharification and alcohol fermentation for 3 days. Alcohol fermentation progressed well in the lots with addition of coconut oil, in the same fashion as in the control lot.

After alcohol fermentation, the resulting mash of 1900 ml were distilled under ambient pressure in a small distiller for ambient pressure, to recover distillation solutions (raw liquor for shochu) of 690 ml, at 1 % of initial distillation cut (vs. mash) respectively. The flavor components of the obtained raw liquor for shochu were analyzed by using a gas chromatography system (GC-9A; manufactured by Shimadzu Corporation).

A sample for gas chromatography was prepared by adding 60 µl of methyl myristate as an internal standard to the raw liquor for shochu (5 ml) to extract thrice by diethyl ether (3 ml), subsequently adding a small amount of sodium sulfate for dehydration and condensation. One µl of the sample was directly injected, to identify the compound on the basis of the agreement with the retention time of the standard substance. Then the concentration of the identified fatty acid ethyl esters were assayed by a method with an absolute standard curve to determine the concentration of fatty acid ethyl esters in 25 % ethanol.

The gas chromatography conditions are as follows.
Column; manufactured by J & W, DB-WAX capillary column (0.32 mm ×0.5 µm×60 m)
Column temperature; 70 °C (5 minutes), 70 to 130 °C (6 °C/min), 130 to 240 °C (5 °C/min) 240 °C (20 minutes)
Injection port temperature; 260 °C
Detector; flame ionization detector, FID at a temperature of 250 °C.
Carrier gas; He (40 ml/min), splitless.

The results are shown in Table 1.

**Table 1**

| | Concentration (ppm) | | | |
|---|---|---|---|---|
| Fatty acid ethyl esters | No addition lot | Coconut oil (1 g) | Coconut oil (2 g) | Coconut oil (3 g) |
| Ethyl caproate | 0.52 | 5.68 | 1.09 | 7.22 |
| Ethyl caprylate | 5.08 | 13.20 | 18.49 | 28.12 |
| Ethyl capriate | 6.62 | 10.52 | 12.32 | 15.03 |
| Ethyl laurate | 2.03 | 14.01 | 19.14 | 24.41 |
| Ethyl myristate | 3.11 | 4.45 | 6.49 | 7.92 |
| Ethyl linoleate | 12.12 | 12.74 | 9.50 | 8.79 |

Compared with the no-addition lot, the concentrations of saturated fatty acid ethyl esters were increased in test lots with addition of coconut oil of 1 g or more per 100 g of mash, such that ethyl caproate was increased by about 2.1 to 13.9 fold, ethyl caprylate was increased by about 2.6 to 5.5 fold, ethyl capriate was increased by about 1.6 to 2.3 fold, ethyl laurate was increased by about 6.9 to 12.0 fold, and ethyl myristate was increased by about 1.4 to 2.5 fold. Compared with the no-addition lot, ethyl linoleate was markedly decreased in test lots with addition of coconut oil of 2 g or more per 100 g of mash.

The raw liquor for shochu was evaluated organoleptically by seven skilled panelists by a five-point method.

The results are shown in Table 2.

**Table 2**

| Test Lots | Evaluation Score | Evaluation compared with control |
|---|---|---|
| No addition (control) | 3.0 | ----- |
| Coconut oil (1 g) | 2.2 | brilliant flavor, mellow taste |
| Coconut oil (2 g) | 2.0 | brilliant flavor, mellow taste, wide taste |
| Coconut oil (3 g) | 2.5 | brilliant flavor, mellow taste, wide taste |
| Mean of assessment scores by seven skilled panelists, after prepared in 25 % ethanol Grade: good (point 1), poor (point 5) | | |

As shown in Table 2, better results were yielded in the lots with addition of coconut oils, compared with the no-addition lot.

### Example 2

The mash was prepared in the same manner as Example 1, except that on day 7 after the second charging, 10g of either coconut oil or palm oil was added per 100 g of mash as fats and oils, followed by distillation to recover shochu.

The shochu recovered from the no-addition lot without fats or fatty oils was divided equally in two fractions, and one fraction was designated as no-addition lot as it was, while the other fraction was again subject to a cooling and filtration process at 10 °C according to a conventional method, and the resulting fraction was designated as cooling and filtration lot. The concentration of fatty acid ethyl esters in each test lot was determined in the same manner as in Example 1.

The results are shown in Table 3.

**Table 3**

| | Concentration (ppm) | | | |
|---|---|---|---|---|
| Fatty acid ethyl esters | No addition lot | Cooling and filtration | Coconut oil | Palm oil |
| Ethyl caprylate | 5.08 | 4.77 | 39.72 | 5.12 |
| Ethyl capriate | 6.62 | 5.35 | 15.18 | 5.75 |
| Ethyl laurate | 2.03 | 0.67 | 20.14 | 1.95 |
| Ethyl myristate | 3.11 | 0.16 | 6.57 | 2.89 |
| Ethyl palmitate | 15.97 | nd | 4.86 | 9.87 |
| Ethyl linoleate | 13.64 | nd | 4.13 | 3.47 |

When 10 g of coconut oil was added per 100 g of mash on day 7 after the second charging, the concentration of saturated fatty acid ethyl esters was increased, and the concentration of unsaturated fatty acid ethyl esters were decreased prominently. When 10 g of palm oil was added per 100 got mash on day 7 after the second charging, the concentration of unsaturated fatty acid ethyl esters was greatly decreased.
The obtained shochu was evaluated organoleptically by seven skilled panelists by a five-score method.

The results are shown in Table 4.

**Table 4**

| Test Lots | Evaluation Score | Evaluation compared with control |
|---|---|---|
| No addition (control) | 3.0 | ----- |
| Cooling and filtration | 2.6 | refreshing taste, slightly less hot |
| Coconut oil | 2.5 | sparkling flavor, mellow taste |
| Palm oil | 2.0 | mellow taste, wide taste |
| Mean of assessment scores by seven skilled panelists after prepared in 25 % ethanol Grade: good (point 1), poor (point 5) | | |

As shown in Table 4, better results were yielded in the lots with addition of coconut oils and in the lots with addition of palm oils compared with the no-addition lot.

### Example 3

The mash was prepared in the same manner as Example 1, except that nothing was added on day 7 after the second charging but immediately before distillation 10g of either coconut oil or palm oil was added per 100 g of mash as fats and oils, followed by distillation to recover shochu.

The shochu recovered from the no-addition lot was divided equally in two fractions, and one fraction was designated as no-addition lot as it was, while the other fraction was again subject to a cooling and filtration process at 10 °C according to a conventional method, and the resulting fraction was designated as cooling and filtration lot.
The concentration of fatty acid ethyl esters in each test lot was determined in the same manner as in Example 1.

The results are shown in Table 5.

**Table 5**

| | Concentration (ppm) | | | |
|---|---|---|---|---|
| Fatty acid ethyl esters | No addition lot | Cooling and filtration | Coconut oil | Palm oil |
| Ethyl caprylate | 5.08 | 4.77 | 6.14 | 4.17 |
| Ethyl capriate | 6.62 | 5.35 | 7.23 | 4.00 |
| Ethyl laurate | 2.03 | 0.67 | 3.56 | 1.41 |
| Ethyl myristate | 3.11 | 0.16 | 4.24 | 1.36 |
| Ethyl palmitate | 15.97 | nd | 9.87 | 7.61 |
| Ethyl linoleate | 13.64 | nd | 3.12 | 4.57 |

When 10 g of coconut oil was added per 100 g of mash immediately before distillation, the concentration of saturated fatty acid ethyl esters was increased, and the concentration of unsaturated fatty acid ethyl esters were decreased prominently. When 10 g of palm oil was added per 100 g of mash immediately before distillation, the concentration of unsaturated fatty acid ethyl esters was greatly decreased.

The obtained shochu was evaluated organoleptically by seven skilled panelists by a five-score method.

The results are shown in Table 6

**Table 6**

| Test Lots | Evaluation Score | Evaluation compared with control |
|---|---|---|
| No addition (control) | 3.0 | ----- |
| Cooling and filtration | 2.6 | refreshing taste, slightly less hot |
| Coconut oil | 2.2 | sparkling flavor, mellow taste |
| Palm oil | 2.3 | mellow taste, wide taste |
| Mean of assessment scores by seven skilled panelists after prepared in 25 % ethanol Grade: good (point 1), poor (point 5) | | |

As shown in Table 6, better results were yielded in the lots with addition of coconut oils and in the lots with addition of palm oils compared with the no-addition lot.

### Example 4

The mash was prepared in the same manner as in Example 1, except that on day 7 after the second charging, instead of adding coconut oil to mash, 500 unit of Lipase M-10(Amano Pharmaceutical Co., Ltd.) was added per 1 g of palm oil to the mixed solution of palm oil and water (50:50; w:w), followed by reaction at 30 °C for 24 hours, and the obtained solution was added to at 4g per 100 g of mash. The mash was then distilled to recover shochu.

The concentration of fatty acid ethyl esters in each test lot was determined in the same manner as in Example 1.

The results are shown in Table 7

**Table 7**

| | Concentration (ppm) | | |
|---|---|---|---|
| Fatty acid ethyl esters | No addition lot | Palm oil | Palm oil + Lipase M-10 |
| Ethyl caprylate | 5.08 | 2.19 | 5.40 |
| Ethyl capriate | 6.62 | 6.04 | 6.75 |
| Ethyl laurate | 2.03 | 1.50 | 2.16 |
| Ethyl myristate | 3.11 | 2.19 | 2.66 |
| Ethyl palmitate | 15.97 | 11.12 | 23.90 |
| Ethyl linoleate | 13.64 | 9.31 | 8.05 |

When palm oil and lipase were added to mash, the concentration of saturated fatty acid ethyl esters were increased and the concentration of unsaturated fatty acid ethyl esters were decreased compared with adding palm oil alone.

The obtained shochu was evaluated organoleptically by seven skilled panelists by a five-score method.

The results are shown in Table 8.

**Table 8**

| Test Lots | Evaluation Score | Evaluation compared with control |
|---|---|---|
| No addition (control) | 3.0 | ----- |
| Palm oil | 2.3 | mellow taste, wide taste |
| Palm oil + Lipase M-10 | 2.1 | mellow taste, good aftertaste |
| Mean of assessment scores by seven skilled panelists after prepared in 25 % ethanol Grade: good (point 1), poor (point 5) | | |

As shown in Table 8, better results were yielded in the lots with addition of palm oils and in the lots with addition of palm oils + Lipase M-10 compared with the no-addition lot.

### Industrial Applicability

According to the method of the present invention, distilled liquor can be produced with a low concentration of unsaturated fatty acid ethyl esters such as ethyl linoleate as precursors of oily odor, with no need of processing of cooling and filtration or processing with activated charcoal. Furthermore, according to the method of the present invention, distilled liquor with mellow taste can be produced.

## Claims

1. A process for producing distilled liquor, comprising adding fats and oils to mash.

2. A process for producing distilled liquor, comprising adding fats and oils and lipase to mash.

3. The process according to Claims 1 or 2, comprising adding 1-30 parts by weight of fats and oils to 100 parts by weight of mash.

4. The process according to Claims 1-3, wherein the fats and oils are fats and oils obtained from plants.

5. The process according to Claim 1-3, wherein the fats and oils are coconut oil or palm oil.

6. The process according to Claims 1-5, wherein the distilled liquor is shochu.
